Europäisches Patentamt

(19) European Patent Office

Office européen des brevets

(11) Publication number : **0 632 296 A1**

(12) **EUROPEAN PATENT APPLICATION**

(21) Application number : **94304829.8**

(22) Date of filing : **01.07.94**

(51) Int. Cl.⁶ : **G02B 5/18**, G02B 27/44, G02B 27/00

(30) Priority : **02.07.93 US 85358**

(43) Date of publication of application : **04.01.95 Bulletin 95/01**

(84) Designated Contracting States : **DE FR GB**

(71) Applicant : **XEROX CORPORATION** Xerox Square Rochester New York 14644 (US)

(72) Inventor : **Harris, Ellis D.** 1646 Lynoak Drive Claremont, California, 91711 (US)

(74) Representative : **Johnson, Reginald George et al** Rank Xerox Ltd Patent Department Parkway Marlow Buckinghamshire SL7 1YL (GB)

(54) **Amplitude and phase optical filtering binary diffractive optical element.**

(57) A binary diffractive optical element (100) filters the amplitude intensity and the phase of an incident light beam by only transmitting a specified percentage and specified phase of the incident light beam into a zero order, non-diffracted beam while the rest is diffracted into the first or higher orders. The phase level (110) of the binary surface relief phase grating structure can be adjusted relative to the total period (P) of the grating to adjust the amount of diffraction and thus control the amplitude of intensity and the phase of the incident beam transmitted through and diffracted by the grating structure. The phase of the zero order, non-diffracted, transmitted light beam cycles from 0 to Π to 0 while the optical transmittance of the intensity cycles from 100% to 0% to 100%.

*FIG. 3*

This invention relates to a binary diffractive optical element, and, more particularly, to amplitude and phase optical filtering with a binary diffractive optical element.

The propagation of a light beam can be changed by three basic means: reflection by a mirror, refraction by a lens and diffraction by a grating. Optical systems traditionally rely on reflection and refraction to achieve the desired optical transformation. Optical design, based on mirror and lens elements, is a well-established and refined process. Until recently, the problems with diffraction and fabricating high efficiency diffractive elements have made diffractive elements unfeasible components of optical systems.

The diffractive process does not simply redirect a light beam. Diffraction, unlike refraction and reflection, splits a light beam into many beams -- each of which is redirected at a different angle or order. The percentage of the incident light redirected by the desired angle into some given diffraction order is referred to as the diffraction efficiency for that order. The diffraction efficiency of a diffractive element is determined by the element's surface profile. If the light that is not redirected by the desired angle is substantial, the result will be an intolerable amount of scatter in the image or output plane of the optical system.

Theoretically, on-axis diffractive phase elements consisting of a grating having a given period can achieve 100 percent diffraction efficiency. To achieve this efficiency, however, a continuous phase profile within any given period is necessary. The theoretical diffraction efficiency of this surface profile is also relatively sensitive to a change in wavelength. By contrast, refractive elements are relatively wavelength insensitive. The technology for producing high quality, high efficiency, continuous phase profiles of the diffraction does not presently exist.

A compromise that results in a relatively high diffraction efficiency and ease of fabrication is a multilevel phase grating. The larger the number of discrete phase levels, the better the approximation of the continuous phase function. These multi-level phase profiles can be fabricated using standard semiconductor integrated circuit fabrication techniques.

As disclosed in Binary Optics Technology: The Theory and Design of Multi-level Diffractive Optical Elements by G.J. Swanson of the Lincoln Laboratory at the Massachusetts Institute of Technology, (Technical Report 854, 14 August 1989) herewithin incorporated by reference and the resulting U.S. Patent No. 4,895,790, also herewithin incorporated by reference, a fabrication process starts with a mathematical phase description of a diffractive phase profile and results in a fabricated multi-level diffractive surface. The first step is to take the mathematical phase expression and generate from it a set of masks that contain the phase profile information. The second step is to transfer the phase profile information from the masks into the surface of the element specified by the lens design.

The first step involved in fabricating the multi-level element is to mathematically describe the ideal diffractive phase profile that is to be approximated in a multi-level fashion. The next step in the fabrication process is to create a set of lithographic masks which are produced by standard pattern generators used in the integrated circuit industry.

A substrate of the desired material, such as Ge, ZnSe, Si, and $SiO_2$, is coated with a thin layer of photoresist. A first lithographic mask is then placed in intimate contact with the substrate and illuminated from above with an ultraviolet exposure lamp. Alternately, pattern generators, either optical or electron beam, can expose the thin layer of photoresist. The photoresist is developed, washing away the exposed resist and leaving the binary grating pattern in the remaining photoresist. This photoresist will act as an etch stop.

The most reliable and accurate way to etch many optical materials is to use reactive ion etching. The process of reactive ion etching anisotropically etches material at very repeatable rates. The desired etch depth can be obtained very accurately. The anisotropic nature of the process assures a vertical etch, resulting in a true binary surface relief profile. Once the substrate has been reactively ion etched to the desired depth, the remaining photoresist is stripped away, leaving a binary phase surface relief grating.

This process produces a two level or binary surface relief phase grating structure in the substrate.

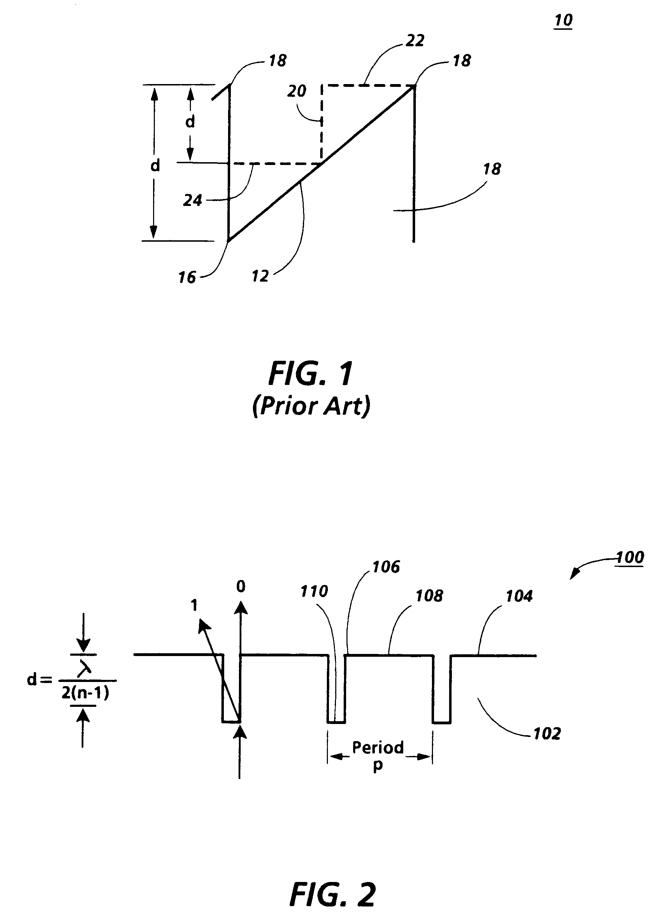

As shown in Figure 1, an ideal continuous phase grating 10 has an angled structure 12 in the optical substrate 14. The angled structure has a deepest point 16 and a reference point 18. The angled structure 12 has a maximum depth of $\lambda / (n - 1)$ measured perpendicularly from the reference point 18 to the deepest point 16 where $\lambda$ is the wavelength of the light beam incident upon the ideal continuous phase grating 10 and n is the index of refraction of the optical substrate 14.

By contrast, a binary approximation 20 of the phase grating 10 has two levels, a reference level 22 and a phase level 24. Both levels 22 and 24 are not angled but flat. The phase level is perpendicularly offset from the reference level by a depth of $\lambda / 2 (n - 1)$ where $\lambda$ is the wavelength of the light beam incident upon the binary approximation 20 of the phase grating and n is the index of refraction of the optical substrate. The binary approximation of the ideal continuous phase grating or binary surface relief phase grating structure will indeed approximate the ideal continuous phase grating for optical purposes.

As noted, the photoresist on the substrate can be exposed with an electron-beam pattern generator. The e-beam direct-write process eliminates masks and their corresponding alignment and exposure problems. Binary optics have also been reproduced using epoxy casting, solgel casting, embossing, injection molding and holographic reproduction.

Binary optical elements have a number of advantages over conventional optics. Because they are computer-generated, these elements can perform more generalized wavefront shaping than conventional lenses or mirrors. Elements need only be mathematically defined : no reference surface is necessary. Therefore, wildly asymmetric binary optics are able to correct aberrations in complex optical systems, and elements can be made wavelength-sensitive for special laser systems.

The binary diffractive optical elements are generally thinner, lighter and can correct for many types of aberrations and distortions than refractive optical elements.

An optical filter is a device which alters the amplitude or phase of the light passing through the device. Filters can be nonselective for wavelength such as neutral density filters or selective for wavelength such as band-pass filters. Filters typically are selectively transmissive either absorbing or reflecting the undesired portions of light.

It would be desirable to have a filter where the undesired portions of light are diffracted into the first or higher diffractive orders.

It would be desirable to have a filter which can alter both the amplitude of the intensity of the light and the phase of the light to produce a filtered beam with a specified amplitude and phase.

One object of this invention is to provide a binary diffractive optical element which functions as an amplitude and phase optical filter.

Accordingly, the present invention provides a binary diffractive optical element as defined in any one of the appended claims.

In accordance with the present invention, a binary diffractive optical element filters the amplitude intensity and the phase of an incident light beam by only transmitting a specified percentage and specified phase of the incident light beam into a zero order, non-diffracted beam while the rest is diffracted into the first or higher orders. The binary diffractive optical element has a binary surface relief phase grating structure in an optical substrate. The binary surface relief phase grating structure has a plurality of gratings with each grating having a reference level and a phase level.

The phase level is offset perpendicularly from the reference level by a depth of $\lambda / 2 (n - 1)$ where $\lambda$ is the wavelength of the incident light beam in air and n is the index of refraction of the optical substrate.

The phase level of each of the gratings of the binary surface relief phase grating structure can be adjusted relative to the total period of the grating to adjust the amount of diffraction and thus control the amplitude of intensity and the phase of the incident beam transmitted through and diffracted by the grating structure. For a given optical transmission percentage, T, which ranges from zero to one, the relative width, d, of the phase level to the grating period is d equals ((square root of T) + 1)/2.

The phase of the zero order, non-diffracted, transmitted light beam cycles from 0 to $\Pi$ to 0 while the optical transmittance of the intensity cycles from 100 % to 0% to 100%.

The present invention will be described further, by way of examples, with reference to the accompanying drawings, in which:-

Figure 1 is a schematic illustration of the cross-section side view of an idealized continuous phase grating and a binary approximation of a continuous phase grating,

Figure 2 is a schematic illustration of the cross-section side view of the binary diffractive optical element for amplitude and phase optical filtering formed according to an embodiment of the present invention,

Figure 3 is a schematic illustration of the cross-section side view of the binary diffractive optical element for amplitude and phase optical filtering with the accompanying amplitude intensity-phase graph of the zero order transmitted light and

Figure 4 is a graphic illustration of the relative width of the phase level to the grating period versus the optical attenuation of the optical beam transmitted and diffracted by the binary diffractive optical element showing the optical phase (0 or $\Pi$) possible for any given optical attenuation according to an embodiment of the present invention.

Reference is now made to Figure 2, wherein there is illustrated the binary diffractive optical element 100 for amplitude and phase optical filtering. The binary diffractive optical element 100 consists of an optical substrate 102 of $SiO_2$ upon which is a binary surface relief phase grating structure 104. The individual blazed gratings 106 of the binary surface relief phase grating structure 104 have a period P. The widths of the first or reference surface 108 and the second or phase level surface 110 equal the period P. The first and second surfaces represent different phase levels in the binary surface relief pattern in the phase grating structure.

The ratio of the width W of the phase level surface 110 to the period P can vary from 0.0 to 1.0 which is equivalent to the phase level surface being 0 to 100 percent of the total period P of the individual grating. The binary surface relief phase grating structure 104 consists of a first surface of the reference surface 108 and a second surface of the phase level or etched level 110 in this illustrative example. The etched depth of the phase level is $\lambda / 2 (n - 1)$ where $\lambda$ is the wavelength of the light beam in air being transmitted through the binary diffractive optical element and n is the index of refraction of the optical substrate 102.

This single etch binary diffractive optical element is used to reprofile an optical beam in the zero diffractive order in both the intensity or amplitude and the phase. A smooth optical surface will transmit 100 % of an incident laser beam with no scatter loss due to diffraction. If a grating such as a binary phase relief grating structure is formed in that smooth surface however, some of the light beam will be diffracted, thus attenuating the light remaining in the zero order.

When the etch depth is $\lambda / 2 (n - 1)$ and when the width of the phase level is half of the grating period, all of the light beam will be diffracted into the first or higher orders, leaving none in the zero order. As the phase level width-to-period ratio varies from 0 to 0.5, the optical transmission will vary from 100 % to 0 % and will remain in phase. As this ratio varies from 0.5 to 1.0, the optical transmission will vary from 0 % to 100 % but the phase will be shifted by half a wavelength (i.e. a phase shift of n ). Thus the attenuation of the light beam, transmitted through the binary diffractive optical element 100 and diffracted by the binary surface relief phase grating structure 104, can be made to lie between 0 % and 100 % and the phase can be either 0° or 180°.

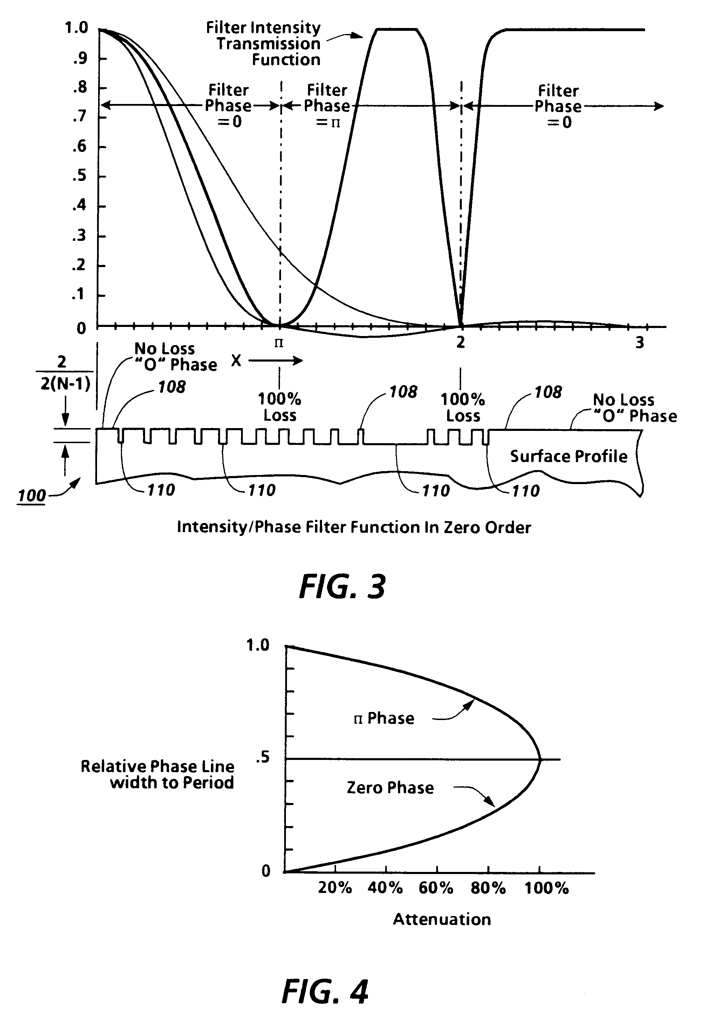

As shown in the illustrative example of Figure 3, a Gaussian beam transmitted through the binary diffractive optical element 100 is modified in both the amplitude intensity and the phase. With a width of the phase level of zero, the first surface of the reference level 108 of the binary phase relief grating structure is flat, perpendicular to an incident beam (not shown). There is 100 % optical transmittance of the beam into the zero order, non-diffracted beam with 0 phase by the binary diffractive optical element. As the width of the phase level 110 of the binary diffractive optical element 100 increases from 0, the optical transmittance for the zero order, non-diffracted beam decreases as portions of the incident beam are diffracted into the first and higher orders by the binary surface relief phase grating structure as the phase remains zero.

When the width of the phase level 110 is 0.5 of the period P, and thus the width of the phase level 110 equals the width of the reference surface 108, the optical transmittance of the incident beam into the zero order, non-diffracted beam is zero. As the width of the phase level continues to increase from 0.5 to 1.0, the phase of the beam transmitted through the binary diffractive optical element becomes $\Pi$ and the optical transmittance of the incident beam (and thus its transmitted intensity) into the zero order, non-diffracted beam also increases.

When the width of the phase level 110 is 1.0 of the period P, the width of the first reference level 108 is 0 and the etch width of the phase level is 100 % of the period. The surface of the phase level of the binary surface relief phase grating is flat, perpendicular to an incident beam (not shown) and the optical transmittance of the incident beam into the zero order, non-diffracted beam is 100%, still with a $\Pi$ phase.

As the width of the phase level 110 begins to decrease from 1.0 of the period P, the phase remains $\Pi$ but the optical transmittance of the incident beam into the zero order, non-diffracted beam also begins to decrease.

When the width of the phase level 110 is 0.5 of the period P, and thus the width of the phase level 110 equals the width of the reference surface 108, the optical transmittance of the incident beam into the zero order, non-diffracted beam is zero. As the width of the phase level 110 continues to decrease from 0.5 to 0.0, the phase of the beam transmitted through the binary diffractive optical element becomes 0 and the optical transmittance of the beam of the incident light beam (and thus its transmitted intensity) into the zero order, non-diffracted beam increases.

When the width of the phase level 110 is 0 of the period P, and the first surface of the reference level 16 of the binary phase relief grating structure is 100% and thus flat and there is 100 % optical transmittance of the incident beam into the zero order, non-diffracted beam and 0 phase.

The binary surface relief phase grating structure 104 is cyclical with regard to the amplitude of intensity and the phase of the incident beam transmitted through and diffracted by the grating structure. The phase of the zero order, non-diffracted beam cycles from 0 to $\Pi$ to 0 while the optical transmittance of the intensity ot the incident beam into the zero order, non-diffracted beam cycles from 100 % to 0 % to 100 %.

The Gaussian input beam is modified in both intensity and phase by a passive binary diffractive optical element filter.

As shown in Figure 4, the relative width of the phase level 110 to the grating period P versus the optical attenuation of the optical beam transmitted and diffracted by the binary diffractive optical element is a smooth function over the entire range of values of the relative width of the phase level 110 and is a parabolic function. The optical attenuation is the opposite of the optical transmittance and refers to the amount of the incident light beam which is diffracted by the binary diffractive optical element.

For a given optical transmission percentage, T, ranging from zero to one, then the relative width, d, of the phase level to the grating period is

d = ((square root of T) + 1)/2    Equation 1

For that given optical transmission percentage, T, ranging from zero to one, the phase can be either 0 or $\Pi$ . If the phase level relative width is used in equation 1, the phase will be zero. If Equation 1 is sued to determine the relative width of the reference level, the phase will be $\Pi$.

The ratio of the width of the phase level to the total grating period can vary from period to period across the binary surface relief phase grating structure of the binary diffractive optical element.

The first reference level surfaces 108 and second phase level surfaces 110 of the binary diffractive optical element are merely illustrative examples. A plurality of individual gratings, each with different phase and intensity filtering can be fabricated to phase shift and intensity modify different portions of the collimated beam which passes through the binary diffractive optical element. The plurality of individual gratings of the binary diffractive optical elements with reference and phase level surfaces need not be concentric, nor symmetric. The plurality of individual gratings of the binary diffractive optical elements can alter the phase and intensity of an incident light beam across the entire two dimensional spatial profile of the light beam.

The illustrative example was a Gaussian incident beam but any uniform or non-uniform intensity and/or phase beam can be the input beam to the binary diffractive optical element just as the transmitted or output beam from the binary diffractive optical element can also be a Gaussian or other uniform beam or a non-uniform beam in amplitude intensity and/or phase.

The optical substrate 12 can also be formed of materials such as Ge, ZnSe, Si, GaAs, and SiO$_2$.

## Claims

1. A binary diffractive optical element (100) for modulating the amplitude and the phase of an incident light beam including

a binary surface relief phase grating structure upon an optical substrate (102), said binary surface relief phase grating structure having a plurality of gratings, each of said plurality of gratings having a reference level (138) and a phase level (110), said phase level being perpendicularly offset by a specified depth from said reference level (108), wherein the ratio of the width of said phase level to the period of said grating determines the amount of said incident beam diffracted by said one grating of said binary surface relief phase grating structure and the amount of said amplitude and said phase of the zero order, non-diffracted light beam transmitted by said binary diffractive optical element.

2. A binary diffractive optical element for modulating the amplitude and the phase of an incident light beam as claimed in claim 1, wherein said specified depth said phase level is perpendicularly offset from said reference level is

λ / 2(n - 1)

where λ is the wavelength of said incident light beam in air and n is the index of refraction of said optical substrate.

3. A binary diffractive optical element for modulating the amplitude and the phase of an incident light beam as claimed in claim 2, wherein when said ratio of the width of said phase level to the total period of said one of said plurality of gratings is zero, said zero order, non-diffracted light beam transmitted by said binary diffractive optical element is 100 % of said incident beam and has a phase of 0; or wherein when said ratio of the width of said phase level to the total period of said one of said plurality of gratings is 0.5, said zero order, non-diffracted light beam transmitted by said binary diffractive optical element is 0 % of said incident beam and has a phase of 0, or wherein when said ratio of the width of said phase level to the total period of said one of said plurality of gratings is one, said zero order, non-diffracted light beam transmitted by said binary diffractive optical element is 100 % of said incident beam and has a phase of Π; or wherein when said ratio of the width of said phase level to the total period of said one of said plurality of gratings is 0.5, said zero order, non-diffracted light beam transmitted by said binary diffractive optical element is 0 % of said incident beam and has a phase of Π, or wherein when said ratio of the width of said phase level to the total period of said one of said plurality of gratings is between zero and 0.5, the optical transmittance of said incident beam to said zero order, non-diffracted light beam is decreasing and said zero order, non-diffracted light beam has a phase of 0.

4. A binary diffractive optical element for modulating the amplitude and the phase of an incident light beam as claimed in claim 2 wherein when said ratio of the width of said phase level to the total period of said one of said plurality of gratings is between 0.5 and one, the optical transmittance of said incident beam to said zero order, non-diffracted light beam is increasing and said zero order, non-diffracted light beam has a phase of Π.

5. A binary diffractive optical element for modulating the amplitude and the phase of an incident light beam as claimed in claim 2 wherein when said ratio of the width of said phase level to the total period of said one of said plurality of gratings is between one and 0.5, the optical transmittance of said incident beam to said zero order, non-diffracted light beam is decreasing and said zero order, non-diffracted light beam has a phase of Π.

6. A binary diffractive optical element for modulating the amplitude and the phase of an incident light beam as claimed in claim 2 wherein when said ratio of the width of said phase level to the total period of said one of said plurality of gratings is between 0.5 and zero, the optical transmittance of said incident beam to said zero order, non-diffracted light beam is decreasing and said zero order, non-diffracted light beam has a phase of 0.

7. A binary diffractive optical element for modulating the amplitude and the phase of an incident light beam as claimed in claim 2 wherein when said ratio of the width of said phase level to the total period of said one of said plurality of gratings is between zero and 0.5, the optical transmittance of said incident beam to said zero order, non-diffracted light beam is decreasing and said zero order, non-diffracted light beam has a phase of 0.

8. A binary diffractive optical element for modulating the amplitude and the phase of an incident light beam as claimed in any one of 1 to 7, wherein for a given optical transmission percentage, the relative width, d, of said phase level to said grating period is
    $$d = ((\text{square root of T}) + 1)/2$$
    where T is the optical transmission percentage which ranges from zero to one.

9. A binary diffractive optical element for modulating the amplitude and the phase of an incident light beam of claim 2 wherein for a given optical transmission percentage, the relative width, d, of said phase level to said grating period is
    $$d = ((\text{square root of T}) + 1)/2$$
    where T is the optical transmission percentage which ranges from zero to one.

10. The binary diffractive optical element for modulating the amplitude and the phase of an incident light beam of claim 1 wherein said plurality of gratings has at least two different ratios of the width of said phase level to the total period of one of said plurality of gratings.

_10_

# FIG. 1
## (Prior Art)

$$d = \frac{\lambda}{2(n-1)}$$

# FIG. 2

Intensity/Phase Filter Function In Zero Order

# FIG. 3

# FIG. 4

8

| | European Patent Office | EUROPEAN SEARCH REPORT | Application Number EP 94 30 4829 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-5 144 484 (SOUTHWELL)<br>* column 1, line 45 - column 2, line 5; figure 2 * | 1 | G02B5/18<br>G02B27/44<br>G02B27/00 |
| A | US-A-3 728 009 (FEDOTOWSKY ET AL.)<br>* column 1, line 34 - column 2, line 11; figures 1-5 * | 1,2 | |
| A | EP-A-0 454 409 (MATSUSHITA ELECTRIC IND.)<br>* page 2; figure 2 * | 1 | |
| P,A | APPLIED OPTICS,<br>vol.32, no.22, 1 August 1993, NEW YORK US<br>pages 4276 - 4278<br>HAIDNER ET AL.<br>* abstract; figures 1-4 * | 1 | |
| A | APPLIED OPTICS,<br>vol.31, no.22, 1 August 1992, NEW YORK US<br>pages 4453 - 4458<br>FARN<br>* figures 2,3 * | 1 | TECHNICAL FIELDS SEARCHED (Int.Cl.6)<br><br>G02B |
| A | DE-A-40 16 362 (SIEMENS)<br>* column 2, line 41 - column 3, line 2; figures 4,5 * | 1 | |

The present search report has been drawn up for all claims

| Place of search | Date of completion of the search | Examiner |
|---|---|---|
| BERLIN | 11 October 1994 | von Moers, F |

EPO FORM 1503 03.82 (P04C01)